# EUROPÄISCHE PATENTSCHRIFT

(11) **EP 2 650 602 B1**
(45) Veröffentlichungstag und Bekanntmachung des Hinweises auf die Patenterteilung: **11.09.2019**
(21) Anmeldenummer: 13001812.0
(22) Anmeldetag: 09.04.2013
(51) Int. Cl.: F21V 5/04, F21V 17/00, G02B 19/00, F21Y 115/10

(54) **Leuchte mit LEDs und Kollimator-Linsen**
Lamp with LEDs and collimator lenses
Lampe avec LEDs et optiques de collimation

(30) Priorität: 10.04.2012 DE 202012004157 U; 13.04.2012 DE 102012007301
(43) Veröffentlichungstag der Anmeldung: 16.10.2013
(73) Patentinhaber: ERCO GmbH, 58507 Lüdenscheid (DE)
(72) Erfinder: Bremerich, Matthias, 58368 Lennestadt (DE); Görres, Markus, 44147 Dortmund (DE)
(74) Vertreter: Roche, von Westernhagen & Ehresmann

(56) Entgegenhaltungen:
- EP-A2- 2 492 578
- WO-A1-00/24062
- WO-A1-2013/041381
- DE-A1-102008 063 369
- DE-A1-102009 053 422
- DE-A1-102009 060 566
- DE-T2- 60 219 075
- DE-T2- 69 937 544
- DE-U1-202010 004 872
- JP-A- 2007 149 552
- US-A1- 2010 177 495
- US-A1- 2011 246 146
- US-B1- 7 766 509

## Beschreibung

Die Erfindung betrifft ein Kollimatoroptik-System für LED-Leuchten.

LED-Leuchten zur Ausleuchtung von Gebäudeflächen oder Gebäudeteilflächen sind bekannt und werden von der Anmelderin seit geraumer Zeit entwickelt und vertrieben.

Beispielsweise ist es aus der deutschen Patentanmeldung DE 10 2009 053 422 A1 der Anmelderin bekannt, eine besondere Kollimatoroptik derartig auszubilden, dass eine besonders enge Bündelung des Lichtes erfolgen kann. Damit können insbesondere Spot-Lichtverteilungen erzeugt werden.

Aus der US 2010/0177495 A1 gehen unterschiedliche Kollimatoroptiken hervor, die auf ihrer Lichteintrittsfläche jeweils eine Schicht aus lumineszierendem Material aufweisen. Beschrieben ist bereits die Möglichkeit eines Austausches unterschiedlicher Kollimatoroptiken zur Erzielung unterschiedlicher Lichtverteilungen. Es ist allerdings nicht offenbart, dass unterschiedliche Kollimatoroptiken unterschiedliche Abstrahlwinkel bereitstellen können. Die Schrift beschreibt auch nicht, dass unterschiedliche Kollimatoroptiken mit gleichen Einbaurastermaßen rotationssymmetrische und nicht-rotationssymmetrische Lichtverteilungen generieren können. Gemäß der Lehre dieser Druckschrift treffen die Lichtanteile ausgehend von der LED zunächst auf die Schicht aus lumineszierendem Material und unterliegen einer Streuung. Die Streuung verhindert, dass Lichtanteile, die ausgehend von der LED auf die Bodenfläche der Höhlung treffen, unmittelbar zu einer Lichtaustrittsfläche der Kollimatoroptik gelangen, und diejenigen Lichtanteile, die auf die Seitenwandbereiche der Lichteintrittsfläche treffen, zu einer Totalreflexionsfläche hingeleitet werden.

Die DE 699 37 544 T2 beschreibt eine Leuchte, bei der mehrere Kollimatorlinsen vorgesehen sind. Ein Kollimatoroptiksystem mit unterschiedlichen Kollimatoroptiken gleicher Einbaurastermaße zur Erzielung unterschiedlicher Lichtverteilungen geht aus der Druckschrift nicht hervor. Die Druckschrift regt an, an den Kollimatorlinsen separate Folien mit sägezahnartigen Strukturen anzubringen, um unterschiedliche Folien und unterschiedliche Ablenkungswinkel zu ermöglichen.

Gemäß der US 2011/246146 A1 wird vorgeschlagen, an Kollimatoroptiken unterschiedlich ausgebildete Fresnelllinsenelemente durch Anklipsen zu befestigen, um unterschiedliche Lichtverteilungen zu erreichen.

Aus der US 7766509 B1 geht ein Kollimatorlinsenelement und eine orientierbare, nämlich drehbar montierbare, Kollimatoroptik hervor. Zur Einstellung der Lichtverteilung der Leuchte kann dieses Element gedreht und damit orientiert werden. Diese Schrift zeigt insbesondere keine Kollimatoroptik mit einer Höhlung, einer Bodenfläche und einer umlaufenden Seitenwandfläche, wobei diejenigen Lichtanteile, die ausgehend von LED auf die Bodenfläche der Höhlung treffen, unmittelbar zur Lichtaustrittsfläche der Kollimatoroptik gelangen, und diejenigen Lichtanteile, die auf die Seitenwandbereiche der Lichteintrittsfläche treffen, zu der Totalreflexionsfläche hin geleitet werden, und dort von dort auf die Lichtaustrittsfläche der Kollimatoroptik geworfen werden. Diese Druckschrift offenbart darüber hinaus weder die Merkmalsgruppe i) des Anspruches 1 noch die Merkmalsgruppe ii) des Anspruches 1.

Die EP 2 492 578 A2 beschreibt eine Beleuchtungsvorrichtung als Downlight mit einer Linsenanordnung aus einer inneren Linse, einer äußeren Linse und einem Klipselement, dem sogenannten Linsenhalter. Zur Variation der Abstrahlcharakteristik werden unterschiedliche äußere Linsen eingesetzt.

Die WO 2013/041381 A1 offenbart ein Linsenmodul mit einer Basis und mehreren Linsen, die innerhalb von Befestigungsöffnungen drehbar angeordnet sind, und durch einen Feststellmechanismus drehfest gesichert werden können.

Aus der ebenfalls auf die Anmelderin zurückgehenden deutschen Patentanmeldung DE 10 2008 063 369 A1 ist eine Kollimatorlinse bekannt, die parallele Lichtstrahlen erzeugt, die anschließend der Eingangsseite einer plattenförmigen Tertiäroptik zugeführt werden. Die Tertiäroptik kann mit Mikrostrukturen versehen sein, um eine Lichtabstrahlung bei unterschiedlichen gewünschten Winkeln zu ermöglichen. Gemäß einem dort vorgeschlagenen Modulsystem können unterschiedliche Tertiäroptiken mit unterschiedlichen Mikrostrukturen versehen sein, so dass durch Austausch der Tertiäroptik geänderte Abstrahlcharakteristiken der Leuchten ermöglicht werden.

Ausgehend von einem Modulsystem für eine Leuchte gemäß der zuletzt erwähnten Patentanmeldung der Anmelderin, stellt sich der Erfindung die Aufgabe, die bestehenden Modulsysteme zu vereinfachen.

Die Erfindung löst diese Aufgabe mit den Merkmalen des Anspruches 1.

Erfindungsgemäß wird ein Kollimatoroptik-System für LED-Leuchten vorgeschlagen, welches mehrere Kollimatoroptiken aufweist, und zumindest eine erste Kollimatoroptik und eine zweite Kollimatoroptik enthält. Die Kollimatoroptiken können im Wesentlichen herkömmlicher Bauform sein, und zum Einsatz in LED-Leuchten geeignet sein. Die LED-Leuchten dienen der Ausleuchtung einer Gebäudefläche oder einer Gebäudeteilfläche, also beispielsweise auch einer Außenfläche oder der Ausleuchtung von in einem Gebäude angeordneten Gegenständen. Die LED-Leuchte weist wenigstens eine, ggf. auch mehrere LED's auf.

Jede Kollimatoroptik weist eine Lichteintrittsfläche, eine Totalreflektionsfläche und eine Lichtaustrittsfläche auf. Die Lichteintrittsfläche begrenzt eine Höhlung zur Aufnahme wenigstens einer LED. Die Höhlung kann so ausgebildet sein, dass auch mehrere LED's, beispielsweise auch eine Multichip-LED, von der Höhlung aufgenommen werden können oder in die Höhlung hineinragen oder an die Höhlung zumindest heranragen.

Die Lichteintrittsfläche der Kollimatoroptik überdeckt oder übergreift insoweit eine Lichtemissionsfläche der LED.

Die Höhlung kann beispielsweise im Wesentlichen schalenförmig ausgebildet sein. Insbesondere kann die Höhlung eine Bodenfläche und eine umlaufende Seitenwandfläche bereitstellen. Die Lichteintrittsfläche kann insoweit unterschiedliche Abschnitte aufweisen.

Weiter umfasst jede Kollimatoroptik wenigstens eine Totalreflektionsfläche. Diese ist insbesondere von der äußeren Mantelfläche der Kollimatoroptik bereitgestellt. Ausgehend von der LED oder von den mehreren LED's werden Lichtanteile unmittelbar auf die Bodenfläche der Höhlung und Lichtanteile auf die Seitenwandbereiche der Lichteintrittsfläche abgestrahlt. Bei Einigen der Kollimatoroptiken des erfindungsgemäßen Kollimatoroptik-Systems, vorteilhafter Weise bei mehreren Kollimatoroptiken des erfindungsgemäßen Kollimatoroptik-Systems, ist vorgesehen, dass diejenigen Lichtanteile, die ausgehend von der LED auf die Bodenfläche der Höhlung treffen, unmittelbar zur Lichtaustrittsfläche der Kollimatoroptik gelangen und diejenigen Lichtanteile, die auf die Seitenwandbereiche der Lichteintrittsfläche treffen, zu der Totalreflektionsfläche hin geleitet werden, und von dort auf die Lichtaustrittsfläche der Kollimatoroptik geworfen werden.

Jede Kollimatoroptik weist des Weiteren eine Lichtaustrittsfläche auf. Diese kann beispielsweise sphärisch oder asphärisch gewölbt sein, alternativ vorteilhaft aber auch plan ausgebildet sein. Für den Fall, dass mit einer Kollimatoroptik eine im Wesentlichen rotationssymmetrisch um eine optische Achse der Kollimatoroptik ausgebildete Lichtverteilung generiert werden soll, sind typischerweise die Lichteintrittsfläche, und damit einhergehend die Bodenfläche und die Seitenwandfläche ebenfalls rotationssymmetrisch ausgebildet. Das Gleiche gilt in diesem Falle für die Totalreflektionsfläche, die später noch beschrieben ist. Für den Fall, dass mit der Kollimatoroptik eine asymmetrische, d. h. bezogen auf die optische Achse nicht rotationssymmetrische Lichtverteilung generiert werden soll, sind insbesondere die Totalreflektionsfläche und / oder die Bodenfläche der Höhlung und / oder die Seitenwandfläche der Höhlung ebenfalls nicht rotationssymmetrisch bezogen auf die optische Achse ausgebildet.

Eine erfindungsgemäße Besonderheit besteht darin, dass die erste Kollimatoroptik eine erste Lichtverteilung bereitstellt und die zweite Kollimatoroptik eine zweite, von der ersten Lichtverteilung unterschiedliche Lichtverteilung bereitstellt. Unterschiedliche Lichtverteilungen können beispielsweise dadurch charakterisiert sein, dass die Kollimatoroptiken unterschiedliche Abstrahlwinkel generieren.

Als Abstrahlwinkel im Sinne der vorliegenden Patentanmeldung wird der Raumwinkelbereich bezeichnet, in den hinein von der Kollimatoroptik emittiertes Licht fällt, wobei diese Betrachtung erfolgt, ohne ggf. noch im Lichtweg zwischen Kollimatoroptik und auszuleuchtender Gebäudefläche angeordnete Abblendelemente oder Reflektoren zu berücksichtigen.

Als Abstrahlwinkel im Sinne der vorliegenden Erfindung wird dabei auch nur derjenige Raumwinkelbereich bezeichnet, in den hinein von der Lichtaustrittsfläche der Kollimatoroptik Licht hinein abgestrahlt wird. Streulichtverluste, die beispielsweise auf Grund nicht gänzlich auszuschließender Reflektionen an Kanten oder Randbereichen von optischen Grenzflächen auftreten können, werden bei dieser Betrachtung ebenfalls nicht berücksichtigt. Die Streulichtanteile stellen aber nur völlig unbedeutende Anteile an dem Gesamtlichtstrom dar und liegen unter 10%, vorteilhafterweise unter 5%, weiter vorteilhafterweise unter 3% des gesamten von der Lichtaustrittsfläche der Kollimatoroptik emittierten Lichtstromes.

Als Abstrahlwinkel im Sinne der vorliegenden Erfindung wird insbesondere auch derjenige Winkel bezeichnet, der im fachmännischen Sinne als Öffnungswinkel bezeichnet wird, und den "full width half max"-Wert darstellt. Es handelt sich also um denjenigen Wert des Lichtabstrahlwinkels, bei dem Lichtintensität etwa auf die Hälfte der maximalen Lichtintensität gefallen ist.

Per Definition dient die Kollimatoroptik dazu, den Öffnungswinkel, d. h. den Winkel, unter dem Licht von der LED abgestrahlt wird, zu reduzieren. Die Lichtstrahlen verlassen daher die Lichtaustrittsfläche der Kollimatoroptik mit einem kleineren Öffnungswinkel oder Abstrahlwinkel, als dem Öffnungswinkel, unter dem die Lichtstrahlen die LED verlassen haben.

Unterschiedliche Lichtverteilungen im Sinne der vorliegenden Patentanmeldung können auch unterschiedliche Symmetrieeigenschaften der erzeugten Lichtverteilungen beschreiben. So kann eine erste Lichtverteilung bezogen auf eine optische Achse der Kollimatoroptik rotationssymmetrisch ausgebildet sein und eine zweite Lichtverteilung bezogen auf die optische Achse der Kollimatoroptik unsymmetrisch ausgebildet sein.

Eine weitere erfindungswesentliche Besonderheit besteht darin, dass die beiden Kollimatoroptiken gleiche Einbaurastermaße aufweisen. Als Einbaurastermaße im Sinne der vorliegenden Patentanmeldung wird eine geometrische Ausbildung der Kollimatoroptik verstanden, die eine Verwendung der beiden Kollimatoroptiken als Modul unter Rückgriff auf zahlreiche Gleichteile in der Leuchte ermöglicht. So kann beispielsweise auf die gleichen Befestigungspunkte und die gleichen Befestigungsmittel zur Festlegung oder Positionierung unterschiedlicher Kollimatoroptiken an der Leuchte, genau genommen an dem Leuchtengehäuse, zurückgegriffen werden. Auch ist der zur Verfügung stehende Einbauraum definiert und für die unterschiedlichen Kollimatoroptiken des Systems ausreichend. Schließlich können die gleichen LED's für unterschiedliche Kollimatoroptiken verwendet werden.

Es genügt mithin der Austausch einer ersten Kollimatoroptik durch eine zweite Kollimatoroptik, um die Lichtverteilung der Leuchte in der gewünschten Weise zu ändern. Andere, insbesondere konstruktive, Änderungen an der Leuchte müssen nicht vorgenommen werden.

Um insoweit beispielsweise eine erste Leuchte mit einer Spot-Lichtverteilung bereitzustellen, also mit einer Lichtverteilung mit einem Abstrahlwinkel oder Öffnungswinkel von typischerweise weniger als 10°, wird eine erste Kollimatoroptik verwendet. Zur Erzielung einer Leuchte mit einer geänderten Lichtverteilung im Sinne eines Abstrahlwinkels von beispielsweise 60°, wird eine andere Kollimatoroptik eingesetzt, wobei alle übrigen Teile der Leuchte unverändert übernommen werden können. Mithin wird eine Art Wechsel-Kollimatoroptik bereitgestellt.

Das Kollimatoroptik-System kann neben der erwähnten ersten und zweiten Kollimatoroptik auch noch zahlreiche weitere Kollimatoroptiken, insbesondere eine Wideflood-Kollimatoroptik mit einem Öffnungswinkel von beispielsweise 100° und eine Kollimatoroptik mit einer asymmetrischen Abstrahlcharakteristik bereitstellen.

Gleiche Einbaurastermaße im Sinne der vorliegenden Patentanmeldung können insbesondere gleiche Außendurchmesser der Kollimatoroptik in dem Bereich der Lichtaustrittsfläche umfassen. So kann beispielsweise für Leuchten mit unterschiedlichen Abstrahlwinkeln oder unterschiedlichen Lichtverteilungen der gleiche, zur Verfügung stehende Einbauraum genutzt werden und auch ein einheitliches ästhetisches Gesamtbild der Leuchte erreicht werden, unabhängig davon, welche Lichtverteilung die Leuchte bereitstellt.

Gemäß einer vorteilhaften Ausgestaltung der Erfindung sind die Lichtaustrittsfläche der ersten Kollimatoroptik und die Lichtaustrittsfläche der zweiten Kollimatoroptik gleich oder im Wesentlichen gleich ausgebildet. Diese vorteilhafte Ausgestaltung der Erfindung umfasst beispielsweise eine gleiche Dimensionierung der Lichtaustrittsfläche, alternativ oder zusätzlich aber auch eine gleiche Ausbildung der Oberfläche, also der Topographie, der Lichtaustrittsfläche.

Als Lichtaustrittsfläche wird im Sinne der vorliegenden Erfindung insbesondere derjenige Abschnitt der Kollimatoroptik verstanden, durch den Licht hindurch austritt, wobei Streulichtanteile von z. B. weniger als 5% unberücksichtigt bleiben.

Bei anderen Ausführungsbeispielen der Erfindung kann die Oberflächenkontur der Lichtaustrittsfläche der unterschiedlichen Kollimatoroptiken des Systems aber auch variieren, um mit unterschiedlichen Kollimatoroptiken unterschiedliche Lichtverteilungen zu erzielen. Eine solche Variation der Topographie der Lichtaustrittsfläche der Kollimatoroptiken ist im Rahmen der vorliegenden Erfindung insbesondere dann vorzunehmen, wenn zugleich auch die Lichteintrittsfläche und / oder die Totalreflektionsfläche der beiden Kollimatoroptiken variiert werden.

Bei weiteren Ausgestaltungen der Erfindung kann auch die Kontur der Lichtaustrittsfläche variieren. Beispielsweise kann die Kontur der ersten Kollimatoroptik kreisförmig sein und die Kontur der zweiten Kollimatoroptik von einer Kreisform abweichen.

Das erfindungsgemäße Kollimatoroptik-System umfasst allerdings auch Kollimatoroptiken, bei denen eine erste Kollimatoroptik und eine zweite Kollimatoroptik eine gleiche Kontur der Lichtaustrittsfläche aufweisen.

Erfindungsgemäß sind die Lichteintrittsfläche der ersten Kollimatoroptik und die Lichteintrittsfläche der zweiten Kollimatoroptik zur Erzielung unterschiedlicher Lichtverteilungen unterschiedlich ausgebildet. Alternativ oder zusätzlich können auch die Totalreflektionsfläche der ersten Kollimatoroptik und die Totalreflektionsfläche der zweiten Kollimatoroptik zur Erzielung unterschiedlicher Lichtverteilungen unterschiedlich ausgebildet sein. Mit anderen Worten wird eine Variation der Lichteintrittsfläche und der Totalreflektionsfläche vorgenommen, um die Lichtverteilung zu ändern. Diese Variation kann durchgeführt werden, ohne die Lichtaustrittsfläche in ihrer Geometrie zu ändern.

Dies ermöglicht insbesondere eine Standardisierung der Leuchtenkonstruktion und beispielsweise auch die Verwendung einheitlicher Leuchtengehäuse und / oder Reflektoren. Die lichttechnische Weiterverarbeitung des von der Lichtaustrittsfläche der Kollimatoroptik abgestrahlten Lichtes kann insoweit innerhalb der Leuchte weiter vereinheitlicht und damit vereinfacht werden.

Gemäß einer vorteilhaften Ausgestaltung der Erfindung umfassen die gleichen Einbaurastermaße gleiche Außendurchmesser der Kollimatoroptiken im Bereich der Lichtaustrittsfläche und / oder im Bereich der Lichteintrittsfläche. Hierdurch wird die Möglichkeit bereitgestellt, standardisierte Positionierorgane vorzusehen und insoweit eine definierte mechanische Schnittstelle bereitzustellen. So kann beispielsweise grundsätzlich entlang einem gleichen Befestigungsraster eine Anbringung unterschiedlicher Kollimatoroptiken mit unterschiedlichen Lichtverteilungen erfolgen, wobei auf die gleichen Befestigungsmittel, z. B. Schrauben, zurückgegriffen werden kann. Auch können hierdurch die Einbauräume standardisiert werden und eine bezogen auf den vorhandenen Einbauraum optimale Lichtverteilung erzielt werden.

Der Begriff Außendurchmesser oder äußerer Außendurchmesser (sowie der später noch verwendete Begriff Innendurchmesser) versteht sich im Falle rotationssymmetrisch (bezogen auf eine optische Achse der jeweiligen Kollimatoroptik) ausgebildeter Kollimatoroptiken als Kreisdurchmesser. Es kann aber auch vorgesehen sein, dass die Außenkonturen oder der Innenkonturen der Kollimatoroptik von einer Kreisform abweichen. In diesem Falle wird als Außendurchmesser oder Durchmesser der Einfachheit halber die breiteste messbare Stelle verstanden oder die Breite an einer vorgegebenen, genormten Umfangsposition.

Gemäß einer weiteren vorteilhaften Ausgestaltung der Erfindung umfassen die gleichen Einbaurastermaße gleiche Höhen der Kollimatoroptiken im Bereich ihrer optischen Achse. Auch dies ermöglicht die Bereitstellung definierter Einbauräume und die Bereitstellung eines modularen Systems für den Leuchtenbau.

Gemäß einer weiteren vorteilhaften Ausgestaltung der Erfindung umfassen die gleichen Einbaurastermaße gleiche Innendurchmesser und / oder gleiche Mindesthöhlungsbreiten der Kollimatoroptik.

Der Innendurchmesser wird im Sinne der vorliegenden Patentanmeldung als die breiteste Stelle der Höhlung entlang einer Ebene definiert, deren Normalenvektor durch die optische Achse bereitgestellt ist. Auch die Mindesthöhlungsbreite, also die geringste noch zugelassene Breite einer Höhlung, wird entlang dieser Ebene definiert. Durch Bereitstellung einer solchen Mindestbreite der Höhlung (Mindesthöhlungsbreite) ist gewährleistet, dass unterschiedliche Kollimatoroptiken gleiche LED's oder gleiche LED-Anordnungen übergreifen können und insoweit durch einen bloßen Wechsel der Kollimatoroptik, ohne dass eine Veränderung an der LED oder der Positionierung der LED vorgenommen werden muss, eine geänderte Lichtverteilung erzielt werden kann.

Weiter vorteilhaft umfassen die gleichen Einbaurastermaße gleiche Innenhöhen oder gleiche Mindesthöhlungshöhen. Als Innenhöhe wird das größte Maß der Höhlung entlang der optischen Achse bezeichnet. Die Mindesthöhlungshöhe ist ein definierter Mindestwert der Innenhöhe, der zulässt, dass unterschiedliche Kollimatoroptiken, ohne dass eine Veränderung der LED-Anordnung oder deren Positionierung getroffen werden muss, eingesetzt werden können.

Gemäß einer weiteren vorteilhaften Ausgestaltung der Erfindung umfassen die gleichen Einbaurastermaße gleiche oder im Wesentlichen gleiche Abstandsmaße von Positionierungsorganen und / oder gleiche Ausbildungen von Positionierungsorganen der Kollimatoroptiken zum Zwecke der Festlegung der Kollimatoroptik relativ zu einer Platine oder relativ zu einem Leuchtengehäuse. Auch kann vorteilhafter Weise vorgesehen sein, dass die Positionierungsorgane nicht der Festlegung sondern lediglich der Positionierung der jeweiligen Kollimatoroptik relativ zu einer Platine oder relativ zu einem Leuchtengehäuse dienen. Es können insoweit beispielsweise Anschlagflächen vorgesehen sein, derart, dass die gleichen Einbaumaße gleiche Anschlagflächen bereitstellen oder gleich wirkende Anschlagflächen bereitstellen. Hierdurch besteht die Möglichkeit, die unterschiedlichen Kollimatoroptiken in vorgegebenen Positionen auf vorgegebene Weisen zu positionieren, bzw. festzulegen, so dass auf eine Vielzahl von Gleichteilen der Leuchte zurückgegriffen werden kann.

Gemäß einer vorteilhaften Ausgestaltung der Erfindung sind die Lichteintrittsfläche der ersten Kollimatoroptik und die Lichteintrittsfläche der zweiten Kollimatoroptik jeweils derartig ausgebildet, dass mit ihr mehrere LEDs übergreifbar sind.

Weitere Vorteile der Erfindung ergeben sich anhand der nicht zitieren Unteransprüche, sowie aus der nachfolgenden Beschreibung der in den Figuren dargestellten Ausführungsbeispiele. In den Zeichnungen zeigen:
- Fig. 1: in einer schematischen teilgeschnittenen Ansicht ein Ausführungsbeispiel einer Leuchte mit einer Kollimatoroptik in Alleindarstellung zur Verwendung in dem erfindungsgemäßen Kollimatoroptik-System,
- Fig. 2: in einer gegenüber Fig. 1 vereinfachten schematischen Darstellung eine weitere Kollimatoroptik zur Verwendung in dem erfindungsgemäßen Kollimatoroptik-System,
- Fig. 3: in einer Darstellung gemäß Fig. 2 eine weitere Kollimatoroptik zur Verwendung in dem erfindungsgemäßen Kollimatoroptik-System,
- Fig. 4: in einer Darstellung gemäß Fig. 2 eine weitere Kollimatoroptik zur Verwendung in dem erfindungsgemäßen Kollimatoroptik-System,
- Fig. 5: eine weitere Kollimatoroptik zur Verwendung in dem erfindungsgemäßen Kollimatoroptik-System,
- Fig. 6: eine perspektivische Unteransicht der Kollimatoroptik der Fig. 5, etwa gemäß Ansichtspfeil VI in Fig. 5,

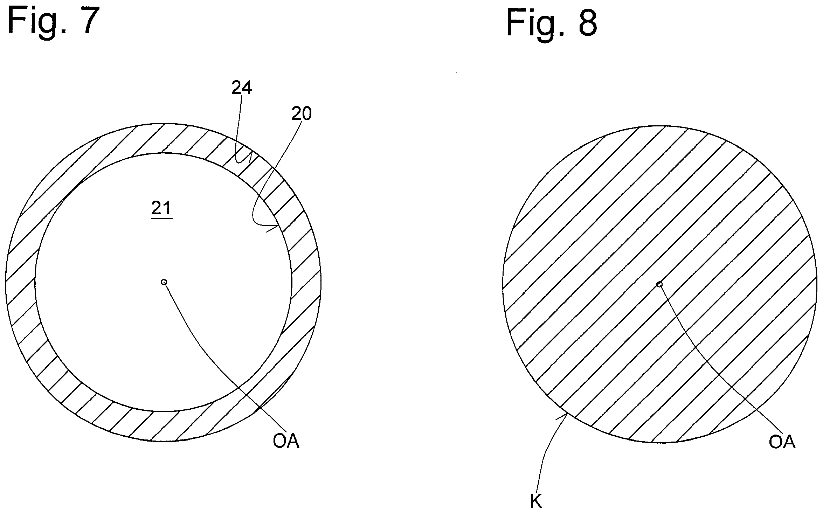

- Fig. 7: eine schematische Schnittdarstellung der Kollimatoroptik der Fig. 4, etwa entlang Schnittlinie VII-VII,
- Fig. 8: eine schematische Schnittdarstellung der Kollimatoroptik der Fig. 4, etwa entlang Schnittlinie VIII-VIII in Fig. 4,
- Fig. 9: eine Darstellung einer Kollimatoroptik gemäß Fig. 3, wobei hier ein Ausführungsbeispiel mit einer nicht rotationssymmetrischen Lichtverteilung, bezogen auf die optische Achse, dargestellt ist,
- Fig. 10: in einer schematischen Darstellung eine schematische Schnittansicht der Kollimatoroptik der Fig. 9 entlang Schnittlinie X-X,
- Fig. 11: eine schematische Schnittdarstellung durch die Kollimatoroptik der Fig. 9 etwa entlang Schnittlinie XI-XI,
- Fig. 12: eine schematische Rückansicht der Kollimatoroptik der Fig. 6 etwa entlang Ansichtspfeil XII in Fig. 6 zur Veranschaulichung einer kreisförmigen Kontur K1 der Lichtaustrittsöffnung und einer Freiform-Kontur K2 der Totalreflektionsfläche 24,
- Fig. 13: eine weitere Kollimatoroptik zur Verwendung in dem erfindungsgemäßen Kollimatoroptik-System, wobei hier sämtliche Lichtanteile in Folge von Totalreflektion von der Lichteintrittsfläche zu der Lichtaustrittsfläche gelangen, und
- Fig. 14: eine weitere Kollimatoroptik zur Verwendung in dem erfindungsgemäßen Kollimatoroptik-System, wobei auf der Lichtaustrittsfläche der Kollimatoroptik mehrere wulstartige Elemente mit gewölbten Oberflächen angeordnet sind.

Das in seiner Gesamtheit in den Figuren mit 10 bezeichnete Kollimatoroptik-System wird nachfolgend anhand unterschiedlicher Kollimatoroptiken 11, die zur Verwendung in dem erfindungsgemäßen Kollimatoroptik-System 10 geeignet sind, beschrieben. Der nachfolgenden Figurenbeschreibung sei vorausgeschickt, dass der Übersichtlichkeit halber gleiche oder miteinander vergleichbare Teile oder Elemente, auch soweit unterschiedliche Ausführungsbeispiele betroffen sind, der Einfachheit halber mit gleichen Bezugszeichen, teilweise unter Hinzufügung kleiner Buchstaben bezeichnet sind.

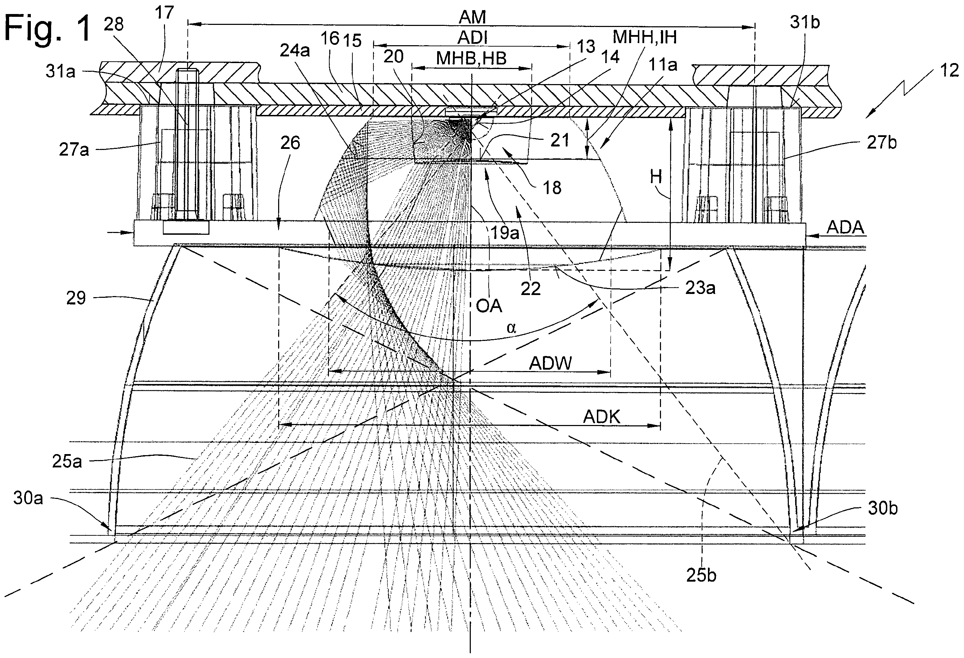

Ausweislich Fig. 1 ist in einer abgebrochenen, teilgeschnittenen, schematischen Ansicht eine Leuchte 12 dargestellt, die eine Kollimatoroptik 11a verwendet, die Bestandteil des erfindungsgemäßen Kollimatoroptik-Systems 10 ist.

Die Leuchte 12 der Fig. 1 zeigt in einer sehr schematischen Anordnung eine LED 13 mit einer Lichtemissionsfläche 14. Die LED 13 kann eine einzige LED oder eine LED-Anordnung mit mehreren LED's sein, beispielsweise auch eine Multichip-LED-Anordnung, darstellen. Es kann sich hierbei um eine LED mit einer im Wesentlichen planen Lichtemissionsfläche oder, wie bei dem Ausführungsbeispiel der Fig. 1 dargestellt, um eine LED handeln, die einen kuppenförmigen Abschluss mit einer entsprechend sphärisch gewölbten Lichtemissionsfläche 14 aufweist. Die Kuppe kann beispielsweise aus Silikon, Kunststoff oder Glas bestehen.

Die LED 13 ist auf einer schematisch angedeuteten Platine 15 befestigt, die die nicht dargestellten Spannungsversorgungsleitungen aufweist. Unmittelbar benachbart der Platine 15 kann eine schematisch angedeutete Kühlkörperanordnung 16 bereitgestellt sein, die dazu dient, die von der LED generierte Wärme abzuführen.

Die Leuchte 12 weist darüber hinaus ein Gehäuse 17 auf, wobei in Fig. 1 lediglich ein Abschnitt des Gehäuses 17 schematisch angedeutet ist, um die Anordnung von Befestigungsmitteln 28 erläutern zu können.

Die Leuchte 12 umfasst eine Kollimatoroptik 11a, die eine Lichteintrittsfläche 19, eine Totalreflektionsfläche 24 und eine Lichtaustrittsfläche 23 aufweist.

Die Kollimatoroptik 11a verfügt über eine Höhlung 18, in die die LED 13 hineinragt. Die Höhlung 18 wird von der Lichteintrittsfläche 19 begrenzt. Hierzu kann die Lichteintrittsfläche eine die Bodenwand 21 der Höhlung 18 ausbildende Fläche und eine die Seitenwand 20 der Höhlung 18 ausbildende Fläche aufweisen.

Wie das Ausführungsbeispiel der Fig. 1 veranschaulicht, übergreift die Lichteintrittsfläche 19 die Lichtemissionsfläche 14 der LED im Wesentlichen vollständig. Die Kollimatoroptik 11c hat den Zweck, das von der LED 13 emittierte Licht im Wesentlichen vollständig einzufangen und zu bündeln. Zur Vermeidung von etwaigen Lichtverlusten ist insoweit eine im Wesentlichen vollständige Überdeckung der Lichtemissionsfläche 14 durch die Lichteintrittsfläche 19 von wesentlichem Vorteil.

Wie sich aus dem Ausführungsbeispiel der Fig. 1 ergibt, ist ein Lichtstrahlenverlauf schematisch angedeutet und nur für einen Halbraum dargestellt. Der von der LED 13 emittierte Lichtstrom weist einen im Wesentlichen zentralen Anteil auf, der unmittelbar auf die Bodenwand 21 gelangt, dort an der Grenzfläche gebrochen wird, und durch einen zentralen Abschnitt 22 der Kollimatoroptik 11a geführt wird, schließlich zu der Lichtaustrittsfläche 23 gelangt, und hier nochmalig gebrochen wird. Diese direkten Lichtanteile, die ohne Totalreflektion von der LED zur Lichtaustrittsfläche 23 gelangen, weisen zwei in Fig. 1 schematisch dargestellte Randstrahlen 25a, 25b auf, die einen Abstrahlwinkel α der Kollimatoroptik 11a definieren.

Des Weiteren zeigt der schematisch angedeutete Lichtstrahlenverlauf der Fig. 1 auch sogenannte indirekte Lichtanteile, also solche Lichtanteile, die ausgehend von der LED durch Seitenwandabschnitte 20 hindurch in die Kollimatoroptik 11a eintreten und auf eine Totalreflektionsfläche 24 treffen. Von dort werden sie zur Lichtaustrittsfläche 23 geworfen und an dieser gebrochen. Eine Abstrahlung dieser Lichtanteile erfolgt vorteilhafter Weise innerhalb des durch die Randstrahlen 25a, 25b vorgegebenen Öffnungswinkels a.

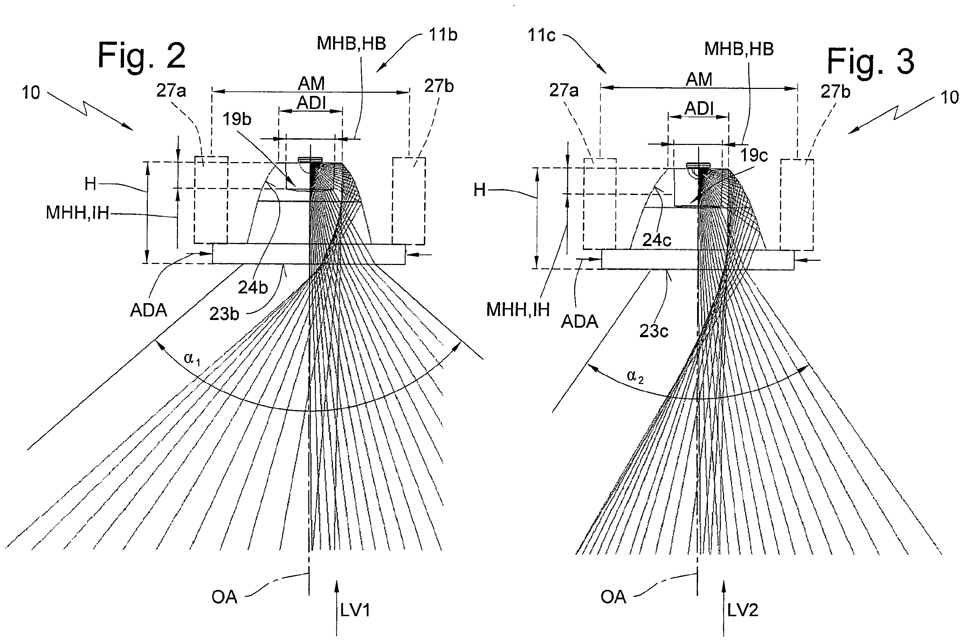

Bei dem Ausführungsbeispiel der Fig. 1 ist die Lichtemissionsfläche 23 sphärisch gewölbt. Die später beschriebenen Kollimatoroptiken der Fig. 2 bis 5 zur Verwendung in dem erfindungsgemäßen Kollimatoroptik-System 10 zeigen demgegenüber plane, d. h. ebene Lichtaustrittsflächen 23.

Lediglich der Vollständigkeit halber sei angemerkt, dass bei dem Ausführungsbeispiel der Fig. 1 ein Reflektor 29 vorgesehen ist. Dieser ist derartig dimensioniert und positioniert, dass er mit seinen unteren Reflektorkanten 30a, 30b gerade an die Randstrahlen 25a, 25b heranragt. Ein solcher Reflektor ist bei den LED-Leuchten, für die das erfindungsgemäße Kollimatoroptik-System 10 Anwendung findet, nicht zwingend erforderlich.

Die Kollimatoroptik 11a umfasst einen plattenförmigen Abschnitt 26, der integral-stoffschlüssiger Bestandteil der z. B. aus Kunststoff bestehenden Kollimatoroptik 11a ist. Der Abschnitt 26 erstreckt sich entlang einer Ebene, deren Normalenvektor durch die optische Achse OA gebildet ist, bis zu einem Außendurchmesser ADA.

Innerhalb des Außendurchmessers ADA befinden sich Positionierungsorgane 27a, 27b, die nach Art von Befestigungsfüßen ausgebildet sind und die von dem Plattenabschnitt 26 hin in Richtung zur LED 13 von dem Abschnitt 26 abstehen. Die Positionierungsorgane 27a, 27b weisen Anlageflächen 31a, 31b auf, die an den entsprechenden Abschnitten des Gehäuses 17 oder, wie lediglich schematisch in Fig. 1 dargestellt, des Kühlkörpers 16, zur Anlage kommen können. Weiter kann jedem Positionierorgan 27a, 27b eine Aufnahme zugeordnet sein, in der ein Befestigungsmittel 28, beispielhaft dargestellt in Fig. 1, eine Schraube, angeordnet ist. Mit dieser Schraube kann die Kollimatoroptik 11a unmittelbar an dem Gehäuse 17 der Leuchte befestigt werden. Die Mittelachse der Aufnahmen der Positionierorgane 27a, 27b sind unter einem Abstandsmaß AM voneinander beabstandet.

Die Positionierungsorgane 27a, 27b, sind vorteilhafter Weise bei den Kollimatoroptiken des erfindungsgemäßen Systems integraler Bestandteil der Kollimatoroptik.

Bei anderen, nicht dargestellten, Ausführungsformen der Erfindung kann ein Positionierungsorgan auch beispielsweise lediglich von einer Positionierungsfläche gebildet sein, oder einer Höhlung oder einer Anschlagfläche.

Die größte axiale Erstreckung der Kollimatoroptik 11a entlang der optischen Achse OA, also der größte Abstand zwischen Lichteintrittsfläche 19 und Lichtaustrittsfläche 23, ist ausweislich Fig. 1 mit H bezeichnet. Dieses Maß wird im Folgenden als Höhe H bezeichnet.

Die axiale Erstreckung der Höhlung 18 entlang der optischen Achse OA ist in Fig. 1 als Innenhöhe IH, bezeichnet.

Als Mindesthöhlungshöhe MHH wird die kleinste, gerade noch zugelassene axiale Erstreckung der Höhlung 18 entlang der optischen Achse OA bezeichnet.

Der Innendurchmesser der Höhlung 18 im Bereich der LED 13 entlang einer Ebene, deren Normalenvektor durch die optische Achse A bereitgestellt ist, wird als Höhlungsbreite HB bezeichnet. Die kleinste, gerade noch zugelassene Höhlungsbreite wird als MHB (Mindesthöhlungsbreite) bezeichnet.

Der Außendurchmesser der Kollimatoroptik 11a entlang einer Ebene, deren Normalenvektor durch die optische Achse OA bereitgestellt ist, und die sich entlang der Eingangsöffnung der Höhlung 18 erstreckt, wird als ADI (Außendurchmesser, innen) bezeichnet.

Die Definition des äußeren Außendurchmessers kann auf unterschiedliche Weise erfolgen.

Wir bereits das Ausführungsbeispiel der Fig. 1 deutlich macht, bietet es sich an, als äußeren Außendurchmesser (oder Außendurchmesser außen) (ADA) die breiteste Stelle des plattenförmigen Abschnittes 26 entlang einer Ebene, deren Normalenvektor durch die optische Achse OA definiert ist, anzunehmen.

Es ist aber auch denkbar, als geeignetes Maß für die Definition des Einbaurastermaßes im Sinne des Anspruches 1 den lichttechnisch wirksamen Außendurchmesser ADW anzunehmen. Als lichttechnisch wirksamer Außendurchmesser ADW wird derjenige Außendurchmesser bezeichnet, der gerade noch eine lichttechnische Funktion besitzt, und insoweit die radial äußersten Lichtanteile noch lichttechnisch verarbeitet. Dies erläutert die Darstellung der Fig. 1.

Als lichttechnisch wirksamer Außendurchmesser ADW kann in diesem Falle auch die breiteste Stelle der Lichtaustrittsfläche 23 im Sinne der Eingangs beschriebenen Definition angesehen werden.

Schließlich kann unter der Annahme, dass die Lichtaustrittsfläche 23 der Kollimatoroptik 11a gekrümmt ist beispielsweise auch derjenige Abschnitt der Platte 26 herausgegriffen und für die Definition des Einbaurastermaßes verwendet werden, der den Übergang zwischen der gekrümmten Lichtaustrittsfläche 23 und des Abschnittes 26 bereitstellt. Der Außendurchmesser des von der Krümmung erfassten Abschnittes ist in Fig. 1 mit ADK bezeichnet.

Das Grundprinzip des erfindungsgemäßen Kollimatoroptik-Systems 10 ergibt sich zunächst bei Vergleich der Fig. 2 bis 5.

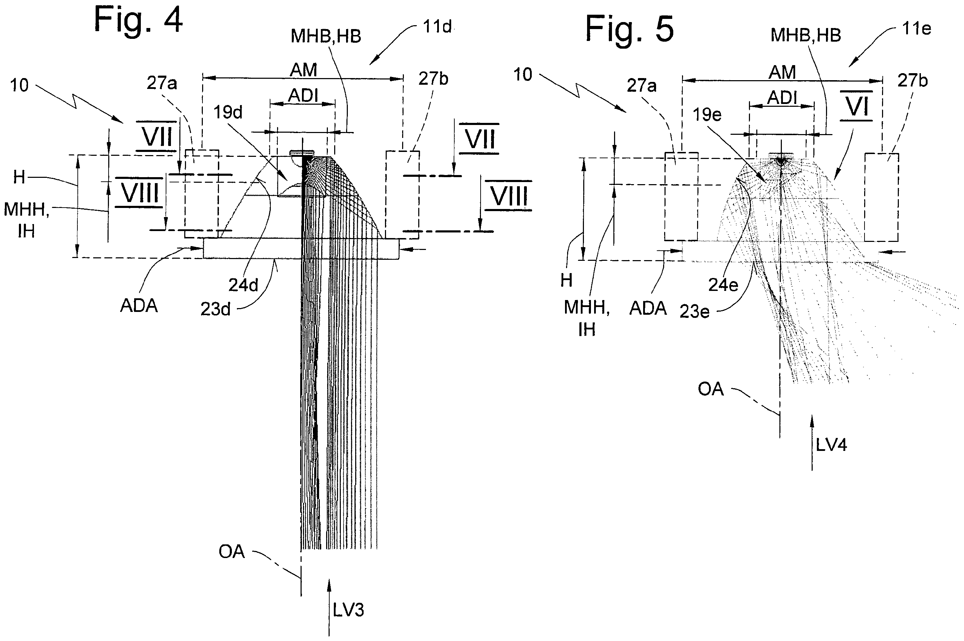

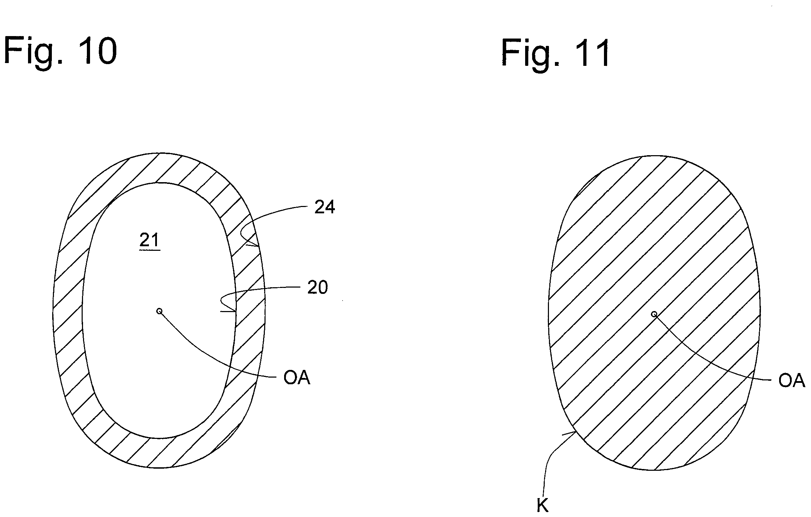

Die Kollimatoroptiken 11b der Fig. 2, 11c der Fig. 3, 11d der Fig. 4, und 11e der Fig. 5 stellen unterschiedliche Lichtverteilungen bereit. Die Kollimatoroptik 11b der Fig. 2 stellt die Lichtverteilung LV1 bereit, die Kollimatoroptik 11c der Fig. 3 stellt die Lichtverteilung LV2 bereit, die Kollimatoroptik 11d der Fig. 4 stellt die Lichtverteilung LV3 bereit, und die Kollimatoroptik 11e der Fig. 5 stellt die Lichtverteilung LV4 bereit.

Die Lichtverteilungen LV1, LV2 und LV3 unterscheiden sich durch den Abstrahlungswinkel α. Dieser beträgt bei der Kollimatoroptik 11d gemäß Fig. 4 weniger als 10°, bei der Kollimatoroptik 11c gemäß Fig. 3 etwa 70° und bei der Kollimatoroptik 11b gemäß Fig. 2 etwa 100°. Diese unterschiedlichen Abstrahlungswinkel werden bei diesen Ausführungsbeispielen ausschließlich durch Variation der jeweiligen Totalreflektionsflächen 24 und Variation der Lichteintrittsflächen 19 erzielt. Die Lichtaustrittsflächen sind bei den Ausführungsbeispielen der Figuren 2 bis 5 gleich, nämlich plan, ausgebildet.

Eine Variation der Lichteintrittsflächen 19 kann Variationen der Seitenwände 20 und Variationen der jeweiligen Bodenwand 21 umfassen.

Die Variationen können nach grundsätzlich bekannten optischen Prinzipien erfolgen, ggf. auch unter Anwendung von Algorithmen und Computersimulationen.

Insbesondere können die Krümmungsradien und die Krümmungsrichtungen der Wölbungen der Bodenwand 21 variiert werden. Gleichermaßen können die Neigungen der beispielweise konusförmigen Seitenwandbereiche 20 variiert werden.

Die Berechnung des Krümmungsverlaufes der Totalreflektionsflächen 24 bei den unterschiedlichen Kollimatoroptiken 11b, 11c, 11d, 11e erfolgt gleichermaßen, wie sich bereits aus den Verläufen der Lichtstrahlen ergibt, nach bekannten optischen Kriterien.

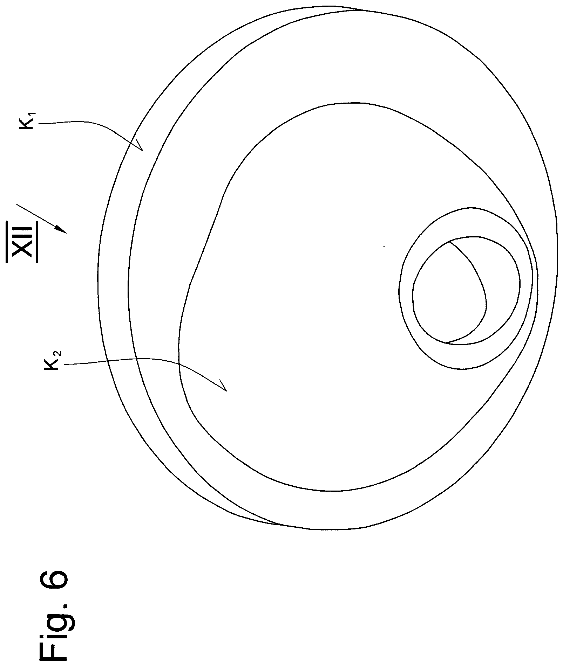

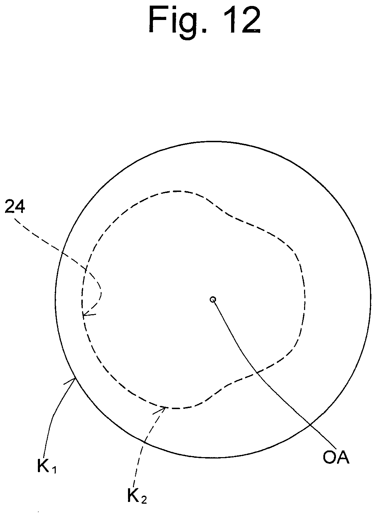

Schließlich kann eine Variation der Lichteintrittsfläche 19 und der Totalreflektionsfläche 24 auch in Umfangrichtung erfolgen. So zeigt die Kollimatoroptik 11e Fig. 5 bei gleichen Einbaurastermaßen eine von einer rotationssymmetrischen Lichtverteilung abweichende Lichtverteilung LV4. Hier können unregelmäßige Konturen K, wie beispielsweise aus Fig. 12 und Fig. 6 ersichtlich, zur Anwendung kommen.

Bezüglich der Figuren 6 und 12 ist ersichtlich, dass die Kontur K1 der Lichtaustrittsfläche 23 kreisförmig und die Kontur K2 der Totalreflektionsfläche 24 von dieser Kontur K1 abweichen kann. Beispielsweise kann die Kontur K2, wie in Figuren 6 und 12 dargestellt, eine Freiform-Kontur sein, um die gewünschte, von einer rotationssymmetrischen Lichtverteilung abweichende Lichtverteilung, zu generieren.

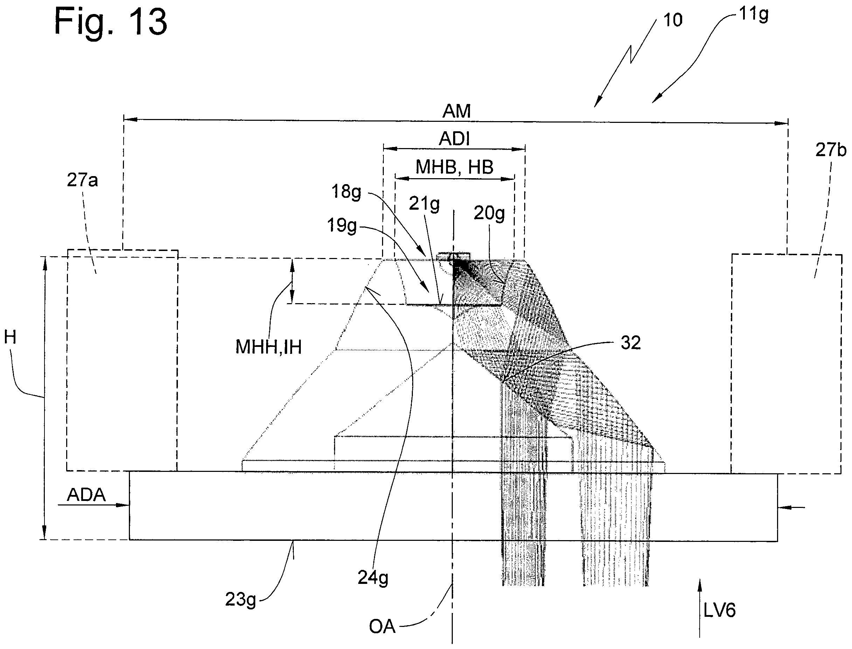

Eine weitere Kollimatoroptik 11g zur Verwendung in dem erfindungsgemäßen Kollimatoroptik-System 10 ist in Fig. 13 dargestellt. Hier ist in Abänderung des bezüglich Fig. 1 beschriebenen lichttechnischen Prinzips eine Anordnung mehrerer Totalreflektionsflächen vorgesehen. Zum einen verlassen Lichtstrahlen ausgehend von der LED 13 deren Lichtemissionsfläche und werden über die Seitenwandabschnitte 20g auf die außen liegende Totalreflektionsfläche 24g geleitet, und von dort zu einem zentraleren Inneren, der optischen Achse OA benachbarten Abschnitt hingeleitet. Sie verlassen die Lichtaustrittsfläche 23 entlang eines zentralen Bereiches der Lichtaustrittsfläche. Zum Anderen verlassen Lichtstrahlbündel ausgehend von der LED deren Lichtemissionsfläche und gelangen durch die Bodenwand 21g auf eine weitere Fläche 32, werden an dieser totalreflektiert, und gelangen zu einem weiteren Abschnitt der Totalreflektionsfläche 24g, die radial außen liegt.

Von diesem, bezüglich Fig. 13 unteren Abschnitt der Totalreflektionsfläche 24g werden die Lichtstrahlen zu einem radial außen liegenden Bereich der Lichtaustrittsfläche 23 geleitet und verlassen von dort die Kollimatoroptik.

Mithin findet hier ein Radialtausch von Lichtanteilen statt, wie im Übrigen in der deutschen Patentanmeldung DE 10 2009 053 422 A1 der Anmelderin beschrieben. Die Fläche 32 wird auch als Doppelfunktionsfläche bezeichnet, da hier zwei Lichtstrahlenbündel auftreffen, wobei der von der LED ausgehende radial innen liegende Lichtstrahlenanteil totalreflektiert wird und der von dem bezüglich Fig. 13 oberen Abschnitt der Totalreflektionsfläche 24g stammende Lichtstrahlenanteil an dieser Fläche 32 lediglich gebrochen wird.

Angemerkt sei, dass durch Variation der beiden Abschnitte der Totalreflektionsfläche 24g, also durch Variation des bezogen auf Fig. 13 oberen Abschnittes und / oder durch Variation des unteren Abschnittes der Totalreflektionsfläche 24g und / oder durch Variation der Ausbildung der Doppelfunktionsfläche 32, sowie gleichermaßen durch Variationen auch der Lichteintrittsfläche 19g, unterschiedliche Abstrahlwinkel des von einer solchen Kollimatoroptik 11g, wie in Fig. 13 gezeigt, emittierten Lichtes erreicht werden können.

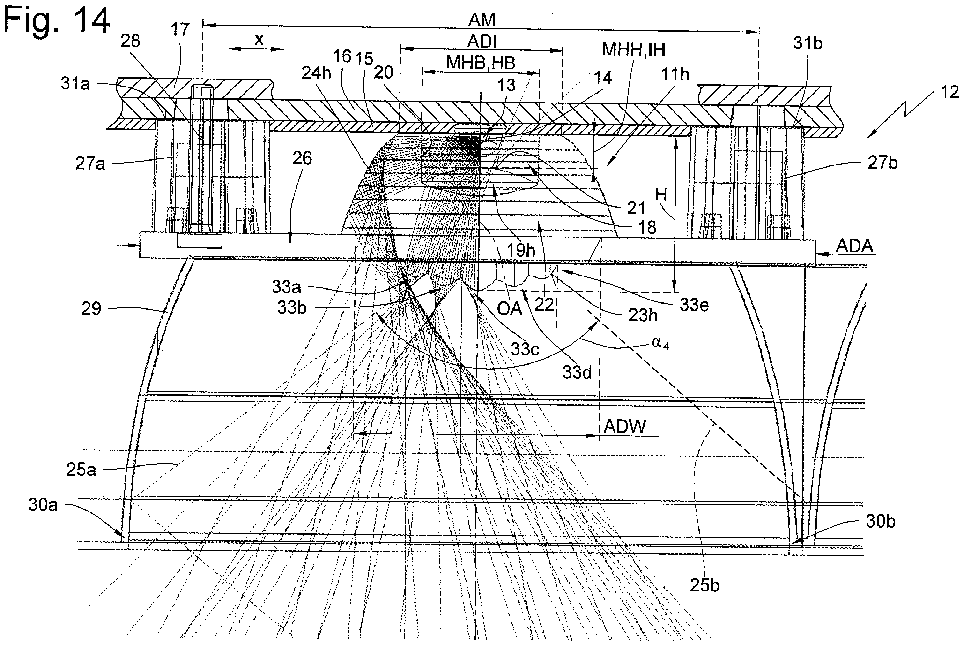

Ein weiteres Ausführungsbeispiel einer Kollimatoroptik 11h zur Verwendung in dem erfindungsgemäßen Kollimatoroptik-System 10 zeigt Fig. 14. Hier ist im Unterschied zu der Darstellung der Fig. 1 auf der Lichtaustrittsfläche eine Mehrzahl von Wölbungen 33a, 33b, 33c, 33d, 33e vorgesehen. Die Wölbungen können sich entlang kreisförmiger oder beliebig gekrümmter Krümmungslinien erstrecken. Die Wölbungen 33a, 33b, 33c, 33d, 33e können von Kappenabschnitten eines torusförmigen Körpers gebildet sein. Insbesondere können die Wölbungen 33a, 33b, 33c, 33d, 33e quer zur Papierebene der Fig. 1 axial langgestreckt sein und sich über Teilabschnitte der Lichtaustrittsfläche 23 oder über die gesamte Lichtaustrittsfläche 23h erstrecken. Hierdurch wird eine in Richtung des Doppelpfeils X aufgespreitzte Lichtverteilung, also eine von einer rotationssymmetrischen Lichtverteilung abweichende Lichtverteilung, erzielt.

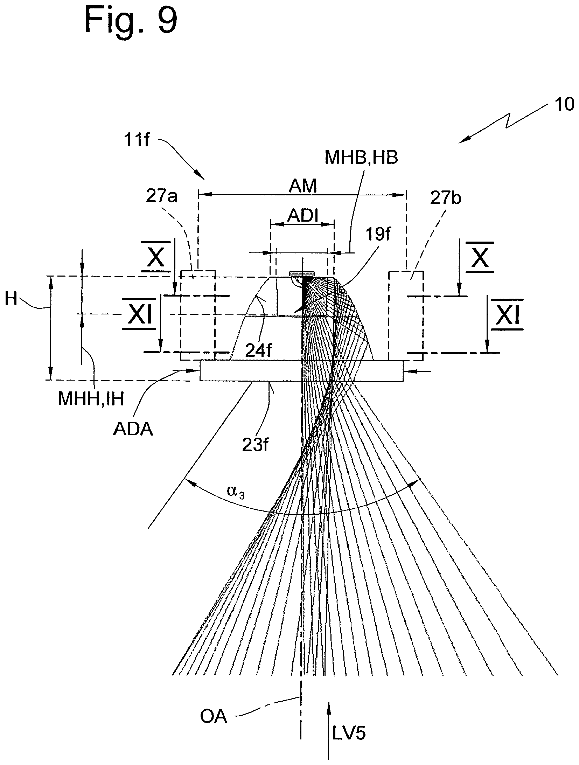

Auch die Figuren 10 und 11 (wie gleichermaßen Fig. 9) zeigen Kollimatoren, die eine von einer rotationssymmetrischen Lichtverteilung abweichende, z. B. ovale Lichtverteilung ermöglichen. Beispielsweise können hiermit ovale Lichtverteilungen generiert werden.

Die unterschiedlichen Kollimatoroptiken 11b, 11c, 11d, 11e, 11f, 11g, 11h können zu dem gleichen Kollimatoroptik-System 10 gehören. Die wesentliche Besonderheit besteht darin, dass die unterschiedlichen Kollimatoroptiken 11b, 11c, 11d, 11e, 11f, 11g, 11h gleiche Einbaurastermaße aufweisen. Insbesondere können die unterschiedlichen Kollimatoroptiken 11b, 11c, 11d, 11e, 11f, 11g, 11h gleiche Abstandsmaße AM aufweisen, und insoweit eine Positionierung unterschiedlicher Kollimatoroptiken an vorgegebenen, gleichen Befestigungspunkten eines Leuchtengehäuses zulassen. Neben der Befestigung kann alternativ oder zusätzlich auch eine definierte Positionierung durch die Positionierungsorgane 27a, 27b und das vorgegebene Abstandsmaß AM ermöglicht werden.

Des Weiteren kann vorgesehen sein, dass die gleichen Einbaurastermaße gleiche äußere Außendurchmesser ADA umfassen. Alternativ oder zusätzlich können die gleichen Einbaurastermaße auch gleiche lichttechnisch wirksame Außendurchmesser ADW oder gleiche krümmungsrand-bezogene Außendurchmesser ADK umfassen.

Alternativ oder zusätzlich können die gleichen Einbaurastermaße auch gleiche innere Außendurchmesser ADI umfassen, und / oder gleiche Höhlungsbreiten HB oder gleiche Innenhöhen IH der Höhlungen.

Schließlich kann alternativ oder zusätzich vorgesehen sein, dass die gleichen Einbaurastermaße gleiche Mindestbreiten MHB der Höhlungen 18, bzw. gleiche Mindesthöhen MHH der Höhlungen 18 aufweisen.

Alternativ oder zusätzlich können die unterschiedlichen Kollimatoroptiken 11b, 11c, 11d, 11e, 11f, 11g, 11h gleiche Höhen H aufweisen.

Die beschriebenen, möglichen, unterschiedlichen Ausprägungen der Einbaurastermaße können einzeln oder kumulativ an unterschiedlichen Kollimatoroptiken 11b, 11c, 11d, 11e, 11f, 11g, 11h vorgesehen sein.

Es genügt eine Übereinstimmung in wenigstens einer Ausprägung von Einbaurastermaßen, wobei es - je nach Ausbildung des erfindungsgemäßen Kollimatoroptik-Systems - vorteilhaft ist, wenn möglichst viele der beschriebenen Ausprägungen von Einbaurastermaßen bei den unterschiedlichen Kollimatoroptiken 11b, 11c, 11d, 11e, 11f, 11g, 11h in Übereinstimmung gebracht werden.

## Patentansprüche

1. Kollimatoroptik-System (10) für LED-Leuchten (12) zur Ausleuchtung von Gebäudeflächen oder Gebäudeteilflächen, umfassend eine erste Kollimatoroptik (11a, 11b, 11c, 11d, 11e) und eine zweite Kollimatoroptik (11a, 11b, 11c, 11d, 11e), wobei beide Kollimatoroptiken jeweils eine, eine Höhlung (18) zur Aufnahme wenigstens einer LED (13) begrenzende Lichteintrittsfläche (19), wenigstens eine Totalreflektionsfläche (24) und eine Lichtaustrittsfläche (23) aufweisen, wobei die Höhlung eine Bodenfläche und eine umlaufende Seitenwandfläche bereitstellt, wobei diejenigen Lichtanteile, die ausgehend von der LED auf die Bodenfläche der Höhlung treffen, unmittelbar zur Lichtaustrittsfläche der Kollimatoroptik gelangen und diejenigen Lichtanteile, die auf die Seitenwandbereiche der Lichteintrittsfläche treffen, zu der Totalreflektionsfläche hin geleitet werden, und von dort auf die Lichtaustrittsfläche der Kollimatoroptik geworfen werden, wobei beide Kollimatoroptiken (11b, 11c) gleiche Einbaurastermaße (AM, ADA, ADW, ADK, HB, IH, MHB, MHH) aufweisen, und wobei die erste Kollimatoroptik (11b) eine erste Lichtverteilung und die zweite Kollimatoroptik (11c) eine zweite, von der ersten Lichtverteilung (LV1) unterschiedliche Lichtverteilung (LV2) bereitstellt, wobei die Lichteintrittsfläche (19b) der ersten Kollimatoroptik (11b) und die Lichteintrittsfläche (19b) der zweiten Kollimatoroptik (11c) zur Erzielung unterschiedlicher Lichtverteilungen (LV1, LV2) unterschiedlich ausgebildet sind und/oder wobei die Totalreflektionsfläche (24b) der ersten Kollimatoroptik (11b) und die Totalreflektionsfläche (24c) der zweiten Kollimatoroptik (11c) zur Erzielung unterschiedlicher Lichtverteilungen (LV1, LV2) unterschiedlich ausgebildet sind, und wobei
i) die erste Lichtverteilung (LV1) einen ersten Abstrahlwinkel (α1) und die zweite Lichtverteilung (LV2) einen zweiten, von dem ersten Abstrahlwinkel (α2) unterschiedlichen Abstrahlwinkel umfasst,
oder
ii) wobei die erste Lichtverteilung (LV1) bezogen auf eine optische Achse (OA) der ersten Kollimatoroptik (11b) rotationssymmetrisch und die zweite Lichtverteilung (LV4) bezogen auf eine optische Achse (OA) der zweiten Kollimatoroptik (11e) unsymmetrisch ausgebildet ist.

2. Kollimatoroptik-System nach Anspruch 1, **dadurch gekennzeichnet, dass** die Lichtaustrittsfläche (23b) der ersten Kollimatoroptik (11b) und die Lichtaustrittsfläche (23c) der zweiten Kollimatoroptik (11c) gleich oder im Wesentlichen gleich ausgebildet sind.

3. Kollimatoroptik-System nach einem der vorangegangenen Ansprüche, **dadurch gekennzeichnet, dass** das Kollimatoroptiksystem die Merkmalsgruppe i) des Anspruches 1 umfasst, und dass die erste Lichtverteilung (LV1) und die zweite Lichtverteilung (LV2) bezogen auf eine optische Achse (OA) der jeweiligen Kollimatoroptik (11b, 11c) rotationssymmetrisch ausgebildet ist.

4. Kollimatoroptik-System nach einem der Ansprüche 1 bis 2, **dadurch gekennzeichnet, dass** das Kollimatoroptiksystem die Merkmalsgruppe i) des Anspruches 1 umfasst, und dass die erste Lichtverteilung (LV4) und die zweite Lichtverteilung bezogen auf eine optische Achse der jeweiligen Kollimatoroptik unsymmetrisch ausgebildet ist.

5. Kollimatoroptik-System nach einem der vorangegangenen Ansprüche, **dadurch gekennzeichnet, dass** die gleichen Einbaurastermaße gleiche oder im Wesentlichen gleiche Außendurchmesser (ADA, ADW, ADK) der Kollimatoroptiken (11b, 11c, 11d, 11e) im Bereich der Lichtaustrittsfläche (23b, 23c, 23d, 23e) und/oder gleiche oder im Wesentlichen gleiche Außendurchmesser (ADI) im Bereich der Lichteintrittsfläche (19) umfassen.

6. Kollimatoroptik-System nach einem der vorangegangenen Ansprüche, **dadurch gekennzeichnet, dass** die gleichen Einbaurastermaße gleiche oder im Wesentlichen gleiche Höhen (H) der Kollimatoroptiken im Bereich ihrer optischen Achse (OA) oder entlang ihrer optischen Achse umfassen.

7. Kollimatoroptik-System nach einem der vorangegangenen Ansprüche, **dadurch gekennzeichnet, dass** die gleichen Einbaurastermaße gleiche oder im Wesentlichen gleiche Innendurchmesser (HB) der Kollimatoroptiken (11b, 11c) im Bereich der Lichteintrittsflächen (19b, 19c) oder gleiche oder im Wesentlichen gleiche Mindesthöhlungsbreiten (MHB) umfassen.

8. Kollimatoroptik-System nach einem der vorangegangenen Ansprüche, **dadurch gekennzeichnet, dass** die gleichen Einbaurastermaße gleiche oder im Wesentlichen gleiche Innenhöhen (IH) der Höhlung (18) Kollimatoroptiken (11b, 11c) oder gleiche oder im Wesentlichen gleiche Mindesthöhlungshöhen (MHH) umfassen.

9. Kollimatoroptik-System nach einem der vorangegangenen Ansprüche, **dadurch gekennzeichnet, dass** die gleichen Einbaurastermaße gleiche oder im Wesentlichen gleiche Abstandsmaße (AM) von Positionierungsorganen (27a, 27b) der Kollimatoroptiken und/oder gleiche oder im Wesentlichen gleiche Ausbildungen von Positionierungsorganen der Kollimatoroptiken zum Zwecke der unmittelbaren oder mittelbaren Festlegung oder Positionierung der jeweiligen Kollimatoroptik relativ zu einer Platine (15) oder relativ zu einem Leuchtengehäuse (17) umfassen.

10. Kollimatoroptik-System nach einem der vorangegangenen Ansprüche, **dadurch gekennzeichnet, dass** die erste Kollimatoroptik (11d) einen Abstrahlwinkel von weniger als 60° und die zweite Kollimatoroptik (11b) einen Abstrahlwinkel (α1) von mehr als 60° aufweist.

11. Kollimatoroptik-System nach einem der vorangegangenen Ansprüche, **dadurch gekennzeichnet, dass** die Lichtaustrittsfläche (23) der ersten Kollimatoroptik und die Lichtaustrittsfläche der zweiten Kollimatoroptik jeweils einen Außendurchmesser (ADA, ADK, ADW) aufweist, der größer ist als 10 mm, insbesondere größer ist als 14 mm, insbesondere größer ist als 16 mm, insbesondere größer ist als 18 mm, insbesondere größer ist als 20 mm, insbesondere größer ist als 21 mm.

## Claims

1. Collimator optical system (10) for LED luminaires (12) for illuminating building surfaces or building surface portions, comprising a first collimator optics (11a, 11b, 11c, 11d, 11e) and a second collimator optics (11a, 11b, 11c, 11d, 11e), wherein the two collimator optics each have a light entry surface (19), delimiting a cavity (18) for accommodating at least one LED (13), at least one total reflection surface (24) and a light exit surface (23), wherein the cavity provides a bottom surface and a peripheral side wall surface, wherein those light components that come from the LED and impinge on the bottom surface of the cavity pass directly to the light exit surface of the collimator optics and those light components that impinge on the side wall regions of the light entry surface are directed towards the total reflection surface and from there are thrown onto the light exit surface of the collimator optics, wherein the two collimator optics (11b, 11c) have identical mounting grid dimensions (AM, ADA, ADW, ADK, HB, IH, MHB, MHH), and wherein the first collimator optics (11b) provides a first light distribution and the second collimator optics (11c) provides a second light distribution (LV2) that differs from the first light distribution (LV1), wherein the light entry surface (19b) of the first collimator optics (11b) and the light entry surface (19b) of the second collimator optics (11c) are configured differently so as to achieve different light distributions (LV1, LV2) and/or wherein the total reflection surface (24b) of the first collimator optics (11b) and the total reflection surface (24c) of the second collimator optics (11c) are configured differently so as to achieve different light distributions (LV1, LV2), and wherein
i) the first light distribution (LV1) comprises a first emission angle (α1) and the second light distribution (LV2) comprises a second emission angle that differs from the first emission angle (α2),
or
ii) wherein the first light distribution (LV1) is rotationally symmetrical in relation to an optical axis (OA) of the first collimator optics (11b) and the second light distribution (LV4) is asymmetrical in relation to an optical axis (OA) of the second collimator optics (11e).

2. Collimator optical system according to claim 1, **characterised in that** the light exit surface (23b) of the first collimator optics (11b) and the light exit surface (23c) of the second collimator optics (11c) are identical or substantially identical.

3. Collimator optical system according to one of the preceding claims, **characterised in that** the collimator optical system comprises feature group i) of claim 1, and **in that** the first light distribution (LV1) and the second light distribution (LV2) is rotationally symmetrical in relation to an optical axis (OA) of the respective collimator optics (11b, 11c).

4. Collimator optical system according to one of claims 1 to 2, **characterised in that** the collimator optical system comprises feature group i) of claim 1, and **in that** the first light distribution (LV4) and the second light distribution is asymmetrical in relation to an optical axis of the respective collimator optics.

5. Collimator optical system according to one of the preceding claims, **characterised in that** the identical mounting grid dimensions comprise identical or substantially identical external diameters (ADA, ADW, ADK) of the collimator optics (11b, 11c, 11d, 11e) in the region of the light exit surface (23b, 23c, 23d, 23e) and/or identical or substantially identical external diameters (ADI) in the region of the light entry surface (19).

6. Collimator optical system according to one of the preceding claims, **characterised in that** the identical mounting grid dimensions comprise identical or substantially identical heights (H) of the collimator optics in the region of the optical axis (OA) thereof or along the optical axis thereof.

7. Collimator optical system according to one of the preceding claims, **characterised in that** the identical mounting grid dimensions comprise identical or substantially identical internal diameters (HB) of the collimator optics (11b, 11c) in the region of the light entry surfaces (19b, 19c) or identical or substantially identical minimum cavity widths (MHB).

8. Collimator optical system according to one of the preceding claims, **characterised in that** the identical mounting grid dimensions comprise identical or substantially identical internal heights (IH) of the cavity (18) collimator optics (11b, 11c) or identical or substantially identical minimum cavity heights (MHH).

9. Collimator optical system according to one of the preceding claims, **characterised in that** the identical mounting grid dimensions comprise identical or substantially identical spacings (AM) of positioning elements (27a, 27b) of the collimator optics and/or identical or substantially identical designs of positioning elements of the collimator optics for the purpose of directly or indirectly fixing or positioning the respective collimator optics relative to a printed circuit board (15) or relative to a luminaire housing (17).

10. Collimator optical system according to one of the preceding claims, **characterised in that** the first collimator optics (11d) has an emission angle of less than 60° and the second collimator optics (11b) has an emission angle (α1) of more than 60°.

11. Collimator optical system according to one of the preceding claims, **characterised in that** the light exit surface (23) of the first collimator optics and the light exit surface of the second collimator optics in each case has an external diameter (ADA, ADK, ADW) that is greater than 10 mm, in particular greater than 14 mm, in particular greater than 16 mm, in particular greater than 18 mm, in particular greater than 20 mm, in particular greater than 21 mm.

## Revendications

1. Système d'optiques de collimation (10) pour des éclairages à DELs (12) afin d'éclairer des surfaces d'immeubles ou des parties de surfaces d'immeubles, comprenant une première optique de collimation (11a, 11b, 11c, 11d, 11e) et une deuxième optique de collimation (11a, 11b, 11c, 11d, 11e), les deux optiques de collimation comprenant chacune une cavité (18) pour recevoir au moins une surface d'entrée de lumière (19) délimitant une DEL (13), au moins une surface de réflexion totale (24) et une surface de sortie de lumière (23), la cavité fournissant une surface de fond et une surface de paroi latérale périphérique, les parts de lumière qui touchent en sortant de la DEL la surface de fond de la cavité, atteignant directement la surface de sortie de lumière de l'optique de collimation, et les parts de lumière qui touchent les zones de paroi latérale de la surface d'entrée de lumière étant dirigées vers la surface de réflexion totale et étant projetées de là sur la surface de sortie de lumière de l'optique de collimation, les deux optiques de collimation (11b, 11c) possédant des masses de grille de montage identiques (AM, ADA, ADW, ADK, HB, IH, MHB, MHH) et la première optique de collimation (11b) fournissant une première répartition de lumière et la deuxième optique de collimation (11c), une deuxième répartition de lumière (LV2) différente de la première répartition de lumière (LV1), la surface d'entrée de lumière (19b) de la première optique de collimation (11b) et la surface d'entrée de lumière (19b) de la deuxième optique de collimation (11c) étant réalisées différemment pour obtenir des répartitions de lumière (LV1, LV2) différentes et/ou la surface de réflexion totale (24b) de la première optique de collimation (11b) et la surface de réflexion totale (24c) de la deuxième optique de collimation (11c) étant réalisées différemment pour obtenir des répartitions de lumière (LV1, LV2) différentes, et dans lequel :
i) la première répartition de lumière (LV1) comporte un premier angle de rayonnement (α1) et la deuxième répartition de lumière (LV2), un deuxième angle de rayonnement diffèrent du premier angle de rayonnement (α1),
ou
ii) dans lequel la première répartition de lumière (LV1) est réalisée en référence à un axe optique (OA) de la première optique de collimation (11b) de manière symétrique en rotation et la deuxième répartition de lumière (LV4), en référence à un axe optique (OA), de la deuxième optique de collimation (11e), de manière asymétrique.

2. Système d'optiques de collimation selon la revendication 1, **caractérisé en ce que** la surface de sortie de lumière (23b) de la première optique de collimation (11b) et la surface de sortie de lumière (23c) de la deuxième optique de collimation (11c) sont réalisées de manière similaire ou essentiellement de manière similaire.

3. Système d'optiques de collimation selon l'une des précédentes revendications, **caractérisé en ce que** le système d'optiques de collimation comprend le groupe de caractéristiques i) de la revendication 1 et **en ce que** la première répartition de lumière (LV1) et la deuxième répartition de lumière (LV2) sont réalisées en référence à un axe optique (OA) de l'optique de collimation (11b, 11c) respective, de manière symétrique en rotation.

4. Système d'optiques de collimation selon l'une des revendications 1 à 2, **caractérisé en ce que** le système d'optiques de collimation comprend le groupe de caractéristiques i) de la revendication 1 et **en ce que** la première répartition de lumière (LV4) et la deuxième répartition de lumière sont réalisées en référence à un axe optique de l'optique de collimation respective, de manière asymétrique.

5. Système d'optiques de collimation selon l'une des précédentes revendications, **caractérisé en ce que** les mêmes masses de grille de montage comprennent de similaires ou essentiellement similaires diamètres extérieurs (ADA, ADW, ADK) des optiques de collimation (11b, 11c, 11d, 11e), dans la zone de surface de sortie de lumière (23b, 23c, 23d, 23e) et/ou de similaires ou essentiellement similaires diamètres extérieurs (ADI) dans la zone de la surface d'entrée de lumière (19).

6. Système d'optiques de collimation selon l'une des précédentes revendications, **caractérisé en ce que** les mêmes masses de grille de montage comprennent de similaires ou essentiellement similaires hauteurs (H) des optiques de collimation, dans la zone de leur axe optique (OA) ou le long de leur axe optique.

7. Système d'optiques de collimation selon l'une des précédentes revendications, **caractérisé en ce que** les mêmes masses de grille de montage comprennent de similaires ou essentiellement similaires diamètres intérieurs (HB) des optiques de collimation (11b, 11c), dans la zone des surfaces d'entrée de lumière (19b, 19c) ou de similaires ou essentiellement similaires largeurs de cavité minimales (MHB).

8. Système d'optiques de collimation selon l'une des précédentes revendications, **caractérisé en ce que** les mêmes masses de grille de montage comprennent de similaires ou essentiellement similaires hauteurs intérieures (IH) de la cavité (18) des optiques de collimation (11b, 11c) ou de similaires ou essentiellement similaires hauteurs de cavité minimales (MHH).

9. Système d'optiques de collimation selon l'une des précédentes revendications, **caractérisé en ce que** les mêmes masses de grille de montage comprennent de similaires ou essentiellement similaires dimensions d'espacement (AM) des organes de positionnement (27a, 27b) des optiques de collimation (11b, 11c) et/ou de similaires ou essentiellement similaires réalisations des organes de positionnement des optiques de collimation afin de déterminer directement ou indirectement ou de positionner chaque optique de collimation par rapport à une platine (15) ou par rapport à un boitier de luminaire (17).

10. Système d'optiques de collimation selon l'une des précédentes revendications, **caractérisé en ce que** la première optique de collimation (11d) comporte un angle de rayonnement inférieur à 60° et la deuxième optique de collimation (11b), un angle de rayonnement (α1) supérieur à 60°.

11. Système d'optiques de collimation selon l'une des précédentes revendications, **caractérisé en ce que** la surface de sortie de lumière (23) de la première optique de collimation et la surface de sortie de lumière de la deuxième optique de collimation possèdent respectivement un diamètre extérieur (ADA, ADK, ADW) qui est supérieur à 10 mm, en particulier supérieur à 14 mm, en particulier supérieur à 16 mm, en particulier supérieur à 18 mm, en particulier supérieur à 20 mm, en particulier supérieur à 21 mm.
